# EUROPÄISCHE PATENTANMELDUNG

(11) **EP 3 417 988 A1**
(43) Veröffentlichungstag der Anmeldung: **26.12.2018**
(21) Anmeldenummer: 17176733.8
(22) Anmeldetag: 19.06.2017
(51) Int. Cl.: B23K 37/02, B25J 5/04, B25J 9/02, B23K 26/08, B23K 101/18

(54) **LASERBEARBEITUNGSMASCHINE MIT EINER SCHERENKINEMATIK**

(71) Anmelder: Manz AG, 72768 Reutlingen (DE)
(72) Erfinder: SCHMIEDER, Benjamin, 70174 Stuttgart (DE); FREUNDT, Martin, 73732 Esslingen (DE)
(74) Vertreter: Kohler Schmid Möbus Patentanwälte

(57) **Zusammenfassung**

Die Erfindung betrifft eine Laserbearbeitungsmaschine (1) mit einem Steuerschlitten (4) und einen Arbeitsschlitten (5), wobei der Steuerschlitten (4) und der Arbeitsschlitten (5) auf Strecken verfahrbar sind, die zueinander parallel verlaufen, wobei am Arbeitsschlitten (5) ein Arbeitsarm (6) angelenkt ist und an dem Steuerschlitten (4) ein Steuerarm (8) angelenkt ist, wobei der Steuerarm (8) an einer Steuerstelle (10) des Arbeitsarms (6) an diesem angelenkt ist und die Steuerstelle (10) eine vordefinierte Lambdadistanz (d) von einem dem Arbeitsschlitten (5) abgewandten Arbeitsende (11) des Arbeitsarms (6) beabstandet ist, wobei im Bereich eines der Schlitten (16, 17) ein erster und im Bereich des Arbeitsendes (11) ein zweiter Umlenkspiegel (16, 17) angeordnet sind, derart, dass ein Laserstrahl (15) entlang eines der Arme (6, 8), insbesondere zumindest abschnittsweise in einem der Arme (6, 8), geführt und im Bereich des Arbeitsendes (11) in Richtung einer Bearbeitungsstelle (18) gelenkt wird.

## Beschreibung

Die Erfindung betrifft eine Laserbearbeitungsmaschine mit einem Steuerschlitten und einem Arbeitsschlitten, wobei der Steuerschlitten und der Arbeitsschlitten auf Strecken verfahrbar sind, die zueinander parallel verlaufen, wobei am Arbeitsschlitten ein Arbeitsarm angelenkt ist und am Steuerschlitten ein Steuerarm angelenkt ist, wobei der Steuerarm an einer Steuerstelle des Steuerarms an diesem angelenkt ist und die Steuerstelle eine vordefinierte Lambdadistanz d von einem dem Arbeitsschlitten abgewandten Arbeitsende des Arbeitsarms beabstandet ist.

Für die Materialbearbeitung mittels Laser muss der Laserstrahl im Bereich des zu bearbeitenden Werkstücks positioniert werden können. Dazu gibt es die Möglichkeit der Positionierung über ein Scannersystem. Dabei wird der Laserstrahl durch zwei Spiegel abgelenkt und durch eine nachgelagerte Fokussieroptik auf dem Werkstück fokussiert.

Eine weitere Möglichkeit ist die Positionierung des Laserstrahls durch ein Achssystem. In der Regel sind dies kartesische Achssysteme. Durch ein solches Achssystem wird der Laserbearbeitungskopf, der die Aufgabe der Strahlformung, Fokussierung, Schutzgaszuführung und eventuell Zusatzmaterialzuführung übernimmt, an der gewünschten Bearbeitungsposition positioniert. Diese Achssysteme sind in der Regel aus einer X-Achse und einer Y-Achse aufgebaut. Klassische Varianten dieser Systeme sind z. B. Portale, bei denen eine Achse durch zwei weitere Achsen, welche orthogonal zu dieser angeordnet sind, bewegt wird. Dabei steigt mit zunehmenden Dynamikanforderungen an das System das Gewicht der jeweiligen Achsen, was zu einer Limitierung führt. Zudem ist das Gewicht des Bearbeitungskopfes in der Regel relevant.

Bei den bekannten Systemen wird in der Regel der gesamte optische Aufbau bewegt und die Achssysteme selbst tragen maßgeblich zur zu bewegenden Masse bei, was die Dynamik des Gesamtsystems limitiert. Die Laserbearbeitungsprozesse selbst (z. B. Schneiden von dünnen Blechen) lassen meist deutlich höhere Vorschubgeschwindigkeiten zu als die Achssysteme, mit denen der Bearbeitungskopf auf dem Werkstück positioniert werden kann. Dies kommt insbesondere bei kleinen Konturen zum Tragen. Dabei ist die maximal mögliche Geschwindigkeit, welche die Kinematiken auf entsprechend langen Geraden erreichen können, meist deutlich höher als die tatsächlich erreichte bei kleinen Konturen. Dies führt zu einer recht niedrigen Nettobearbeitungsgeschwindigkeit, welche trotz hoher Laserleistung zu einem geringen Durchsatz der Anlage führt.

Aufgabe der vorliegenden Erfindung ist es, eine Laserbearbeitungsmaschine bereitzustellen, die eine deutlich höhere Dynamik aufweist.

Gelöst wird diese Aufgabe erfindungsgemäß durch eine Laserbearbeitungsmaschine mit einem Steuerschlitten und einem Arbeitsschlitten, wobei der Steuerschlitten und der Arbeitsschlitten auf Strecken verfahrbar sind, die zueinander parallel verlaufen, wobei am Arbeitsschlitten ein Arbeitsarm angelenkt ist und an dem Steuerschlitten ein Steuerarm angelenkt ist, wobei der Steuerarm an einer Steuerstelle des Steuerarms an diesem angelenkt ist und die Steuerstelle eine vordefinierte Lambdadistanz d von einem dem Arbeitsschlitten abgewandten Arbeitsende des Arbeitsarms beabstandet ist. Im Bereich eines der Schlitten ist ein erster und im Bereich des Arbeitsendes ein zweiter Umlenkspiegel angeordnet, derart, dass ein Laserstrahl entlang eines der Arme, insbesondere parallel zu einem der Arme, vorzugsweise zumindest abschnittsweise in einem der Arme, geführt und im Bereich des Arbeitsendes in Richtung einer Bearbeitungsstelle gelenkt wird.

Mit einer solchen Laserbearbeitungsmaschine ist es möglich, dass die zu bewegenden Massen im Punkt der Bearbeitung auf ein Minimum zu reduzieren. Somit können hohe Beschleunigungswerte erreicht werden, was wiederum zu einem höheren Nettodurchsatz der Laserbearbeitungsmaschine beiträgt. Die maximal mögliche Prozessgeschwindigkeit kann erhöht werden. Die Kinematik, umfassend den Steuerarm und den Arbeitsarm, stellt eine so genannte Lambdakinematik oder Scherenkinematik dar. Designbedingt hat eine solche Kinematik geringe bewegte Massen. Die Strahlführung erfolgt vorzugsweise innerhalb eines der Arme oder zumindest im Wesentlichen parallel zu einem der Arme. Es besteht eine konstante Armlänge und somit konstante Strahlweglänge ab dem Ort der Einspiegelung des Laserstrahls (erster Umlenkspiegel), unabhängig von der Bearbeitungsposition des Arbeitsendes. Es besteht die Möglichkeit der Integration von Optiken und beispielsweise einer Gaszuführung innerhalb eines Arms, was zu einer weiteren Massereduktion im Bereich der Bearbeitungsstelle, d. h. am Arbeitsende des Arbeitsarms, führt.

Der erste Umlenkspiegel kann an dem Arbeitsschlitten oder dem Steuerschlitten angeordnet sein. Der zweite Umlenkspiegel kann im Bereich des Arbeitsendes des Arbeitsarms angeordnet sein.

Der vordefinierte Lambdaabstand d kann Null sein. Vorzugsweise ist der vordefinierte Lambdaabstand d jedoch größer als ein Zehntel der Länge des Arbeitsarms.

Der Arbeitsschlitten und der Steuerschlitten können an parallel verlaufenden Führungen angeordnet sein. Insbesondere können sie sogar an derselben Führung angeordnet sein und/oder einen gemeinsamen Führungsteil aufweisen. Als gemeinsamer Führungsteil kann dabei auch ein Teil eines Linearantriebs verstanden werden. Beispielsweise können der Steuerschlitten und der Arbeitsschlitten einen gemeinsamen Stator aufweisen, der mit jeweils einem Läufer des Steuerschlittens und des Arbeitsschlittens zusammenwirkt.

Weitere Vorteile ergeben sich, wenn ein dritter Umlenkspiegel außerhalb eines Schlittens angeordnet ist, der einen Laserstrahl auf den ersten Umlenkspiegel lenkt. Insbesondere kann durch den dritten Umlenkspiegel der Laserstrahl eines Lasergenerators oder eines Kollimators auf den ersten Umlenkspiegel umgelenkt werden.

Weitere Vorteile ergeben sich, wenn zumindest einer der Umlenkspiegel verstellbar ist. Beispielsweise können der erste und/oder der zweite Umlenkspiegel als verstellbare Spiegel ausgeführt sein. Mit verstellbaren Spiegeln wäre es möglich, die Bearbeitungsstelle relativ zum Arbeitsende des Arbeitsarms zu verstellen. Beispielsweise könnten die Umlenkspiegel über einen Piezoantrieb oder einen Galvanometerantrieb verstellbar sein.

Vorzugsweise kann eine Fokussieroptik vorgesehen sein. Durch die Fokussieroptik kann der Laserstrahl in einer Fokusebene fokussiert werden. Dabei kann die Fokussieroptik vor dem ersten Umlenkspiegel oder zwischen dem ersten und dem zweiten Umlenkspiegel angeordnet sein. Insbesondere kann die Fokussieroptik im Bereich des Arbeitsendes angeordnet sein. Um die bewegten Massen im Bereich des Arbeitsendes zu reduzieren, kann es jedoch vorteilhaft sein, die Fokussieroptik im Bereich des ersten Umlenkspiegels, d. h. an einem der Schlitten oder sogar außerhalb der Kinematik, umfassend die Schlitten und die Arme, anzuordnen. In diesem Fall müsste die Fokussieroptik nicht zusammen mit der bewegten Kinematik, d. h. den Schlitten und den Armen, bewegt werden.

Ist die Fokussieroptik vor dem ersten Umlenkspiegel angeordnet, könnte diese beispielsweise mit mindestens einer Fokussierlinse ausgebildet sein. Insbesondere könnte eine Vorfokussierung vor dem ersten Umlenkspiegel durchgeführt werden. Ist die Fokussieroptik zwischen dem ersten und dem zweiten Umlenkspiegel angeordnet, insbesondere im Bereich des ersten Umlenkspiegels, kann die Fokussieroptik als telezentrisches F-Theta-Objektiv ausgeführt sein. Dadurch kann ein stets orthogonaler Einfall des Laserstrahls auf dem Werkstück sichergestellt werden.

Gemäß einer Ausführungsform der Erfindung kann vorgesehen sein, dass zwischen dem dritten und dem ersten Umlenkspiegel eine verstellbare Ablenkspiegelanordnung vorgesehen ist. Durch diese Ablenkspiegel kann auch die Bearbeitungsstelle relativ zum Arbeitsende verstellt werden.

Gemäß einer Ausführungsform kann eine Fokusnachführung vorgesehen sein. Dadurch können insbesondere Maschinen- und/oder Bauteiltoleranzen ausgeglichen werden. Dabei kann ein optisches Element entlang der Strahlachse verfahren werden, was eine Änderung der Divergenz des Laserstrahls und somit der Fokuslage zur Folge hat. Alternativ kann einer der Umlenkspiegel als adaptiver Spiegel ausgeführt sein.

Um eine parallele Strahlführung zu erreichen, kann die Laserbearbeitungsmaschine einen Kollimator aufweisen. Weiterhin kann vorgesehen sein, dass die Laserbearbeitungsmaschine einen Lasergenerator aufweist.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung in verschiedenen Stadien der Benutzung dargestellt und in der nachfolgenden Beschreibung näher erläutert.

Es zeigen:
- Fig. 1: eine Draufsicht auf eine schematisiert dargestellte Laserbearbeitungsmaschine mit Scherenkinematik;
- Fig. 2: eine Seitenansicht der Laserbearbeitungsmaschine gemäß Fig. 1;
- Fig. 3: eine Ausführungsform einer Laserbearbeitungsmaschine;
- Fig. 4: eine weitere Ausführungsform einer Laserbearbeitungsmaschine;
- Fig. 5: eine weitere Ausführungsform einer Laserbearbeitungsmaschine.

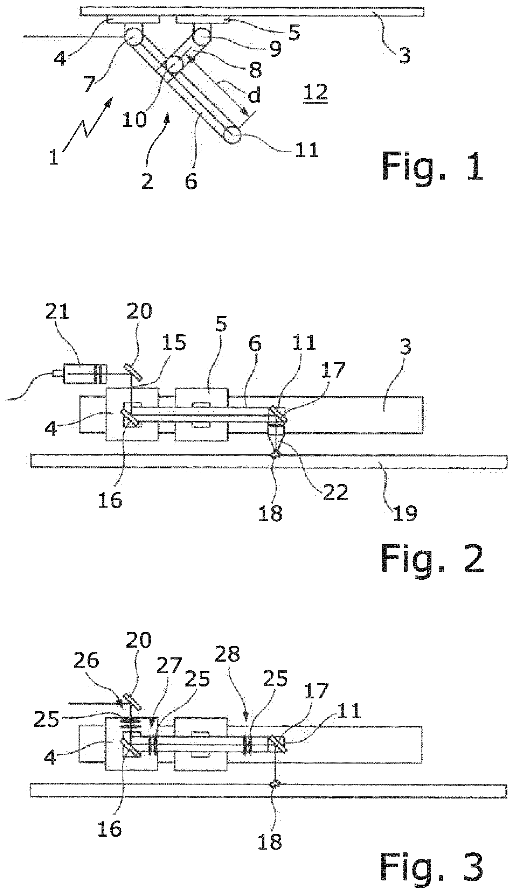

Die Fig. 1 zeigt eine Laserbearbeitungsmaschine 1 mit einer so genannten Scherenkinematik 2. Die Scherenkinematik 2 umfasst eine Führung 3 entlang der ein Arbeitsschlitten 4 und ein Steuerschlitten 5 aufeinander abgestimmt verfahrbar sind. Ein Arbeitsarm 6 ist an der Stelle 7 gelenkig mit dem Arbeitsschlitten 4 verbunden, während ein Steuerarm 8 an der Stelle 9 gelenkig mit dem Steuerschlitten 5 verbunden ist. An einer Steuerstelle 10 ist der Steuerarm 8 mit dem Arbeitsarm 6 gelenkig verbunden. Die Steuerstelle 10 ist eine Lambdadistanz d von einem Arbeitsende 11 des Arbeitsarms 6 beabstandet.

Werden der Arbeitsschlitten 4 und der Steuerschlitten 5 synchron relativ zur Führung 3 bewegt, so wird auch das Ende 11 parallel zur Führung 3 bewegt. Bleibt beispielsweise der Arbeitsschlitten 4 stehen und bewegt sich lediglich der Steuerschlitten 5, so macht das Arbeitsende 11 eine bogenförmige Bewegung um die Stelle 7. Durch überlagerte Bewegungen von Arbeitsschlitten 4 und Steuerschlitten 5 kann das Arbeitsende 11 an unterschiedlichen Positionen im Arbeitsraum 12 positioniert werden.

Die Fig. 2 zeigt eine Seitenansicht gemäß Fig. 1. Gleiche Elemente sind mit den gleichen Bezugsziffern wie in Fig. 1 bezeichnet. Hier ist zu erkennen, dass ein Laserstrahl 15 zunächst durch einen ersten Umlenkspiegel 16 umgelenkt wird, sodass er entlang des und insbesondere parallel zum Arbeitsarm 6 verläuft. Durch einen zweiten Umlenkspiegel 17 wird der Laserstrahl 15 erneut umgelenkt, sodass er an einer Bearbeitungsstelle 18 auf eine Werkstückoberfläche 19 trifft. Der Laserstrahl 15 kann zwischen den Umlenkspiegeln 16, 17 auch im Arbeitsarm 6 geführt werden.

Um den Laserstrahl 15 auf den ersten Umlenkspiegel 16 zu lenken, kann ein dritter Umlenkspiegel 20 vorgesehen sein, vor dem wiederum ein Kollimator 21 angeordnet sein kann, der den Laserstrahl auf den dritten Umlenkspiegel 20 lenkt.

Im gezeigten Ausführungsbeispiel ist eine Laserdüse 22 am Arbeitsende 11 dargestellt. Dies bedeutet, dass entlang des Arbeitsarms 6, vorzugsweise im Arbeitsarm 6, auch Schneid- und/oder Schutzgase geführt werden. Im Bereich des Arbeitsendes 11 ist somit kein vollständiger Laserbearbeitungskopf vorgesehen, sondern lediglich eine Laserdüse 22. Dadurch wird die zu bewegende Masse im Bereich des Arbeitsendes 11 reduziert. Der erste und der zweite Umlenkspiegel 16, 17 sind starr angeordnet. Der erste Umlenkspiegel 16 ist im Bereich der Stelle 7, insbesondere am Arbeitsschlitten 4, angeordnet. Der zweite Umlenkspiegel 17 ist am Arbeitsende 11 des Arbeitsarms 6 angeordnet.

Im Ausführungsbeispiel der Fig. 2 ist eine Fokussieroptik auch im Bereich der Laserdüse 22 angeordnet.

Die Fig. 3 zeigt eine alternative Ausführungsform, wobei Elemente, die denen der Fig. 1 und 2 entsprechen, dieselben Bezugsziffern tragen. In diesem Ausführungsbeispiel ist eine Fokussieroptik 25 an einer der Positionen 26, 27, 28 angeordnet, also entweder zwischen dem dritten und dem ersten Umlenkspiegel 20, 16 oder zwischen dem ersten und dem zweiten Umlenkspiegel 16, 17. Beispielsweise kann die Fokussieroptik 25 im Bereich des Arbeitsschlittens 4 im Strahlengang vor oder nach dem ersten Umlenkspiegel 16 angeordnet sein. Dies ist hinsichtlich der zu bewegenden Massen besonders vorteilhaft. Alternativ kann eine Fokussieroptik 25 an der Stelle 28, d. h. im Bereich des Arbeitsendes 11 vorgesehen sein.

Die Umlenkspiegel 16, 17 können starr angeordnet sein oder sie können verstellbar ausgebildet sein, sodass die Bearbeitungsstelle 18 bezüglich des Arbeitsendes 11 unterschiedlich ausgerichtet werden kann.

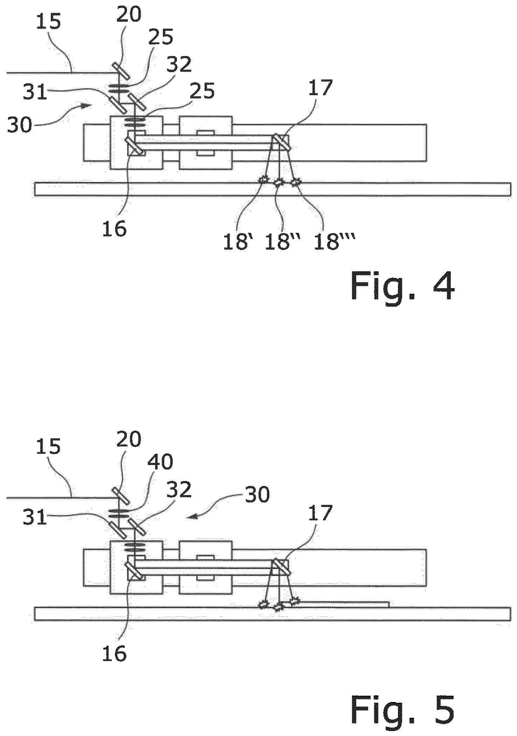

Bei der Ausführungsform gemäß der Fig. 4 kann im Strahlengang vor dem ersten Umlenkspiegel 16 eine Ablenkspiegelanordnung 30 vorgesehen sein. Eine Fokussieroptik 25 kann im Strahlengang vor oder nach der Ablenkspiegelanordnung 30 vorgesehen sein. Durch die Ablenkspiegelanordnung mit den Ablenkspiegeln 31, 32, die verstellbar angeordnet sind, kann der Laserstrahl 15 auf unterschiedliche Stellen des Umlenkspiegels 16 gelenkt werden, sodass dieser wiederum auf unterschiedliche Stellen des Umlenkspiegels 17 fällt und somit unterschiedliche Bearbeitungsstellen 18', 18", 18"' realisiert werden können. Zwischen den Umlenkspiegeln 16, 17 verläuft der Laserstrahl unter Umständen nicht vollständig parallel. Diese Führung des Laserstrahls, d. h. vom ersten Umlenkspiegel 16 zum zweiten Umlenkspiegel 17 mit geringfügigen Winkelabweichungen, wird dennoch als eine Strahlführung parallel zum Arbeitsarm 6 betrachtet.

Im Unterschied zu der Ausführungsform der Fig. 4 weist die Ausführungsform gemäß der Fig. 5 noch zusätzlich ein optisches Element 40 auf, welches entlang der Strahlachse des Laserstrahls 15 verstellbar ist. Hierdurch kann eine Fokusnachführung realisiert werden. Insbesondere kann damit die Fokuslage verändert werden.

## Patentansprüche

1. Laserbearbeitungsmaschine (1) mit einem Steuerschlitten (5) und einen Arbeitsschlitten (4), wobei der Steuerschlitten (5) und der Arbeitsschlitten (4) auf Strecken verfahrbar sind, die zueinander parallel verlaufen, wobei am Arbeitsschlitten (4) ein Arbeitsarm (6) angelenkt ist und an dem Steuerschlitten (5) ein Steuerarm (8) angelenkt ist, wobei der Steuerarm (8) an einer Steuerstelle (10) des Arbeitsarms (6) an diesem angelenkt ist und die Steuerstelle (10) eine vordefinierte Lambdadistanz d von einem dem Arbeitsschlitten (4) abgewandten Arbeitsende (11) des Arbeitsarms (6) beabstandet ist, **dadurch gekennzeichnet, dass** im Bereich eines der Schlitten (4, 5) ein erster und im Bereich des Arbeitsendes (11) ein zweiter
Umlenkspiegel (16, 17) angeordnet sind, derart, dass ein Laserstrahl (15) entlang eines der Arme, insbesondere zumindest abschnittsweise in einem der Arme, geführt und im Bereich des Arbeitsendes (11) in Richtung einer Bearbeitungsstelle (18) gelenkt wird.

2. Laserbearbeitungsmaschine nach Anspruch 1, **dadurch gekennzeichnet, dass** ein dritter Umlenkspiegel (20) außerhalb eines Schlittens angeordnet ist, der einen Laserstrahl auf den ersten Umlenkspiegel (16) lenkt.

3. Laserbearbeitungsmaschine nach einem der vorhergehenden Ansprüche, **dadurch gekennzeichnet, dass** zumindest einer der Umlenkspiegel (16, 17, 20) verstellbar ist.

4. Laserbearbeitungsmaschine nach einem der vorhergehenden Ansprüche, **dadurch gekennzeichnet, dass** eine Fokussieroptik (25) vorgesehen ist.

5. Laserbearbeitungsmaschine nach Anspruch 4, **dadurch gekennzeichnet, dass** die Fokussieroptik (25) vor dem ersten Umlenkspiegel (16) oder zwischen dem ersten und dem zweiten Umlenkspiegel (16, 17) angeordnet ist.

6. Laserbearbeitungsmaschine nach Anspruch 5, **dadurch gekennzeichnet, dass** die Fokussieroptik (25) im Bereich des Arbeitsendes (11) angeordnet ist.

7. Laserbearbeitungsmaschine nach einem der vorhergehenden Ansprüche 4 bis 6, **dadurch gekennzeichnet, dass** die Fokussieroptik (25) ein F-Theta-Objektiv umfasst.

8. Laserbearbeitungsmaschine nach einem der vorhergehenden Ansprüche, **dadurch gekennzeichnet, dass** zwischen dem dritten und dem ersten Umlenkspiegel (20, 16) eine verstellbare Ablenkspiegelanordnung (30) vorgesehen ist.

9. Laserbearbeitungsmaschine nach einem der vorhergehenden Ansprüche, **dadurch gekennzeichnet, dass** eine Fokusnachführung vorgesehen ist.

10. Laserbearbeitungsmaschine nach einem der vorhergehenden Ansprüche, **dadurch gekennzeichnet, dass** ein optisches Element (40) entlang der Strahlachse des Laserstrahls (15) verstellbar ist.

11. Laserbearbeitungsmaschine nach einem der vorhergehenden Ansprüche, **dadurch gekennzeichnet, dass** die Laserbearbeitungsmaschine (1) einen Kollimator (21) aufweist.

12. Laserbearbeitungsmaschine nach einem der vorhergehenden Ansprüche, **dadurch gekennzeichnet, dass** die Laserbearbeitungsmaschine (1) einen Lasergenerator aufweist.
